# EUROPEAN PATENT SPECIFICATION

(11) **EP 1 532 201 B1**
(45) Date of publication and mention of the grant of the patent: **21.02.2007**
(21) Application number: 03749238.6
(22) Date of filing: 27.08.2003
(51) Int. Cl.: C08K 5/00, C08K 5/136, C08K 5/13, C08L 33/12, A01N 25/10

(54) **ANTIMICROBIAL ACRYLIC POLYMER**
ANTIMIKROBIELLES ACRYLPOLYMER
POLYMERE ACRYLIQUE ANTIMICROBIEN

(30) Priority: 29.08.2002 US 406866 P
(43) Date of publication of application: 25.05.2005
(73) Proprietor: MICROBAN PRODUCTS COMPANY, Huntersville, NC 28078 (US)
(72) Inventor: ONG, Ivan, W., Charlotte, NC 28210 (US); DANIEL, John, Meredith, Germantown, TN 38138 (US)
(74) Representative: Schoppe, Fritz
(86) International application number: PCT/US2003/027147
(87) International publication number: WO 2004/020514

(56) References cited:
- WO-A-00/14128
- WO-A-99/47595
- GB-A- 2 211 093
- US-A- 5 746 959

## Description

### BACKGROUND OF THE INVENTION

The present invention relates generally to polymer materials, in particular to polymers which are resistant to the growth of certain microbiological species such as bacteria and fungi. In particular, the present invention relates to sheets of acrylic polymers that are thermoformable.

The acrylics group of polymers is dominated by two resins- one used principally for blending with other resins and as a fiber (polyacrylonitrile or PAN) and the other used principally for molding (polymethylmethacrylate or PMMA). The present invention is directed primarily toward PMMA.

The molding resin, PMMA, is a very popular engineering thermoplastic material. Common brand names for PMMA includePerspex®, Plexiglas®, Lucite®, Acrylite®, ModenGlass®, and Diakon®. The resin is polymerized by the addition polymerization method and forms a plastic that is atactic and therefore amorphous.

The most important property of PMMA is its optical clarity. This plastic has a very high light transmittance. It is also quite insensitive to UV light. It has low oxidation sensitivity, a high gloss, and overall weather resistance. Together, these characteristics result in a high retention of clarity and light transmittance over long periods of time. These desirable optical properties led to numerous and diverse applications such as windshields (especially for aircraft), skylights, outdoor signs, boat surfaces, automobile tail lights, display cases, light fixtures, shower stalls, spas, bathroom basins, and counter tops, hot tubs, shelving and decorative laminates, among others.

The relatively low processing temperature, low shrinkage, and good dimensional stability make PMMA easy to process in injection molding and extrusion. A major product for PMMA is acrylic sheet which can be thermoformed into many of the products mentioned earlier.

The popularity of acrylic sheets in these applications also means that acrylic sheets are often exposed to high levels of moisture. In the areas of baths, showers, and spas the acrylic material is almost constantly in contact with water. This is especially the case with spas and hot tubs which have considerable fluid volume and are therefore not drained on a regular basis.

Water left in bath basins or spas for only a couple of days can become fouled with numerous biological organisms. In many instances a yellow or brownish scum line develops on the surface of the basin or spa near or at the interface of the standing water and air. With additional aging the water becomes cloudy as algae, bacteria and fungi grow.

Even in areas where water does not stand for extended periods of time, e.g., bathroom sinks and basins, the frequency of wetting can lead to substantial bacterial and fungal growth.

In short, thermoformable acrylic sheeting is often used in applications having high moisture exposure. Thus acrylic sheeting can serve as a growth surface for bacteria, fungi and other microbes that are aesthetically unpleasing, damaging to the product (e.g., cause staining or discoloration), and/or harmful to human health. Accordingly, there is a great need for a control strategy for successfully reducing or substantially eliminating the proliferation of microbes on acrylic surfaces.

The majority of existing control strategies for reducing microbes on acrylic surfaces utilizes treatment of the water by application of chemicals or topical application of antimicrobial agents. For example, in swimming pools and large hot tubs, the algae and the bacteria are usually controlled by the addition of an oxidant such as sodium hypochlorite or an in situ generation of ozone, and by filtering the water through diatomaceous earth. Such treatments are expensive and in small applications, such as a bathroom basin, they are not an option. Bathroom basins and smaller hot tubs and spas typically require the application of topical antimicrobial solutions (e.g., bleach) followed by physical abrasion to remove built up bio-scum. Such topical treatments are time consuming and are not durable.

What is desired is a thermoformable acrylic sheet that has built-in antimicrobial protection that reduces or substantially eliminates the proliferation of bacteria, algae, fungi, and other microbes on its surface. Such an acrylic sheet would also reduce and/or substantially eliminate the need for exterior treatment of the sheet or water.

Attempts at producing_such sheeting are known from the prior art For example, international publication WO 99/47595 discusses a biocidal plastic material comprising an acrylic polymer containing 5% to 50% of a rubbery co-polymer and a biocidal compound. The polymer is purportedly suitable for use in preparing extruded sheets for thermoforming applications. Several biocides are discussed including triclosan, silver, isothiazolones, zinc pyrithione, 10-10' oxybisphenoxyarsine (OBPA), and benzisothiazolin-3-one derivatives.

Similarly, European Patent Application EP 893,473 discusses a thermoplastic acrylic sheet composition that can contain an antimicrobial composition. Trade names for OBPA and isothazolones are mentioned as possible antimicrobial agents. The '473 document, however, provides no guidance regarding effective amounts of antimicrobial agents or how to incorporate them into the acrylic polymer.

Although some of the known acrylic sheets having built-in antimicrobial agents demonstrate some efficacy against the buildup of microorganisms, there is a continuing need for more efficacious antimicrobial sheeting. The reason for this continuing need is three-fold.

One reason is based in economics. The addition of some antimicrobial products into acrylic polymers increases the per-unit cost of sheeting to levels that are unacceptable to the consumer. The use of silver as an antimicrobial agent is a notable example.

Another reason is based in manufacturing problems. Most industrial acrylic sheet manufacturing processes are precisely controlled processes that produce product with specific characteristics (e.g., optical clarity). The addition of antimicrobial agents often alters the process (e.g., curing time) and/or results in unacceptable product (e.g., opaque sheeting). Inorganic antimicrobial agents such as silver and copper are notable examples in that they tend to discolor thermoformed articles.

Finally, fungal growth remains a problem in spa and bath applications.

Accordingly, there is a need for a commercially acceptable solution to the above discussed problems. This solution should provide an economical alternative to existing antimicrobial acrylic products. This solution should also integrate into existing acrylic sheet manufacturing processes without causing unacceptable process changes. Finally, the solution should demonstrate acceptable efficacy against fungal growth.

### BRIEF SUMMARY OF PREFERRED EMBODIMENTS

The present invention derives from research directed at developing a commercially viable process for making a thermoformable acrylic sheet that exhibits antimicrobial characteristics. One result of this research is an antimicrobial additive composition that exhibits exceptional efficacy against both bacteria and fungus when incorporated into acrylic polymers. In one preferred embodiment the additive composition according to the invention comprises a quantity of 2,4,4'-trichloro-2'-hydroxydiphenyl ether and a quantity of orthophenyl phenol. 2,4,4'-trichloro-2'-hydroxydiphenyl ether is commonly known as "triclosan". For ease of discussion the remainder of this application will use the term "triclosan" in place of 2,4,4'-trichloro-2'-hydroxydiphenyl ether. Likewise, orthophenyl phenol will be abbreviated as OPP.

In a further embodiment the invention encompasses a polymer composition having antimicrobial activity wherein the composition comprises an acrylic polymer, triclosan and OPP.

In yet another embodiment, the invention encompasses a method of making an antimicrobial polymer composition. In this embodiment a quantity of triclosan and OPP is added to an acrylic polymer material to form an antimicrobial acrylic polymer composition which may then be formed into sheets and other products.

### DETAILED DESCRIPTION

As used herein, the term "antimicrobial" includes biostatic activity, i.e., where the proliferation of microbiological species is reduced or eliminated, and true biocidal activity where microbiological species are killed. Furthermore, the terms "microbe" or "antimicrobial" should be interpreted to specifically encompass bacteria and fungi as well as other single-celled organisms such as mold, mildew and algae.

As noted previously, the concept of making thermoformable acrylic sheeting having built-in antimicrobial agents is known as evidenced by WO 99/47595 and EP 893,473. Yet, to date, the known thermoformable sheets have not met with a high degree of commercial success for reasons stated previously.

This commercial need led to the present invention, which is, in one broad embodiment, a synergistic combination of a broad-spectrum antibacterial agent and an antifungal agent. Together these two agents form an antimicrobial additive composition for imparting antimicrobial characteristics to acrylic polymers, thermoformable acrylic sheets, and articles made from such sheets. In particular, the synergistic effect of these agents imparts antibacterial and antifungal characteristics to thermoformable acrylic sheets at an acceptable cost and without disrupting manufacturing processes and without unacceptably altering the end product.

The antimicrobial additive composition for imparting antimicrobial characteristics to thermoformable acrylic sheets according to the invention comprises a quantity of triclosan and OPP. Triclosan is commercially available from a number of sources. One such source is Ciba Specialty Chemicals which sells a technical grade of triclosan (i.e., about 99%active) under the trade name of Ingrasan DP300. OPP is one of the active ingredients found in Lysol® and is likewise commercially available in technical form from Dow Chemical Company under the trade name Dowcide.

The antimicrobial additive composition according to the invention preferably contains triclosan and OPP in a weight ratio of active ingredients between about 90:10 and about 10:90 triclosan to OPP. More preferred ratios are between about 60:40 and 40:60 with compositions having about a 50:50 ratio being most preferred.

One of the reasons that triclosan and OPP are used in the practice of the present invention is that their combination surprisingly results in a synergistic effect; meaning that the efficacy they exhibit in combination is greater than the efficacy either exhibits alone. The synergistic effect is discussed in more detail in the Examples. Furthermore, both are soluble in PMMA and PMMA precursors and thus may be seamlessly integrated into existing processes or provided in the form of a premixed masterbatch (i.e., they can be delivered via a polymeric carrier).

In a further embodiment the invention encompasses an acrylic polymer composition having antimicrobial activity. The composition according to the invention comprises an acrylic polymeric material, triclosan, and OPP.

The acrylic polymer composition comprises a homopolymer or copolymer of at least one C₁₋₆ alkyl (C₀₋₈ alk)acrylate. Preferred acrylic materials are homopolymers or copolymers of the methyl, ethyl, butyl, 2-ethylhexyl, cyclohexyl or phenyl esters of acrylic acid or methacrylic acid.

The polymer chemistry underlying the base acrylic material utilized in the practice of the invention is well known among those skilled in the art and will not be discussed in detail herein. As an aid to the reader, however, a brief synopsis of the two primary methods for forming acrylic sheet is provided.

In very general terms, the majority of acrylic sheeting is manufactured in either a casting or an extrusion process. In a very basic extrusion process a quantity of PMMA pellets passed through a heated screwmelter where they are softened and then forced through a slot die into a sheet form. Usually the PMMA pellets are of a homopolymer or a copolymer that is primarily PMMA but this percentage may vary depending upon the particular process, designated end use, or the presence of other additives.

Extrusion processes typically run at fairly high temperatures, e.g., around 200 °C, and thus can vaporize or "boil off' organic antimicrobial agents such as those used in the practice of the invention. For example, triclosan vaporizes at about 205° C. Accordingly, if organic antimicrobial agents are used in an extrusion process upward adjustments in antimicrobial agent loadings or other precautions may be necessary to ensure sufficient retention of antimicrobial agent in the final product.

The other primary sheet making process is a casting process. The casting process begins by making an acrylic "syrup" which in onebasic form is a solution of PMMA polymer dissolved in MMA monomer that has been initiated with a peroxide or UV light. Acrylic syrup can also be made by interrupting the polymerization process before the chains get very long.

After the syrup is made it is cast on a long, flat form to create a sheet which is then allowed to cure. After the sheet has cured to the proper degree it can be manipulated and thermoformed in accordance with processes well known to those skilled in the art.

The invention may be utilized using either an extrusion or a casting process. Casting processes, however, are particularly well suited to the practice of the invention.

The composition of the acrylic material is selected according to the application in which the material is to be used. For example, if the material is intended to be cast in a sheet for subsequent thermoforming, e.g., to form a tub or spa; then an acrylic material formulated for casting and thermal molding should be selected. Likewise, if the material is intended to be extruded those skilled in the art may alter the composition for extrusion purposes without undue experimentation.

In preferred embodiments the combined weight concentration of the triclosan and the OPP in the polymer composition according to the invention is between about 250 ppm and 50,000 ppm based upon the weight of the polymer. In particularly preferred embodiments the triclosan is present in the polymer composition in concentrations between about 1000 ppm and 2500 ppm and the OPP is present between about 1000 ppm and about 2500 ppm.

The ratio of triclosan and OPP likewise falls within preferred ranges. The broadest preferred range for the triclosan to OPP ratio is between about 90:10 and 10:90 based upon weight of the active ingredient. A more preferred range is between about 60:40 and 40:60 triclosan to OPP. 50:50 ratios of triclosan and OPP are particularly preferred.

The polymeric material of the invention may have many applications. It is useful as a resin for molding or extrusion applications, e.g., to make doors or panels for interior or exterior cladding applications etc. It may be provided in the form of a sheet material, e.g., for providing walls, linings, etc., or which may be suitable for forming into articles such as bathtubs, shower stalls, etc., by thermoforming. It may also be useful in the form of a curable resin, e.g., a polymethyl methacrylate resin dissolved in methyl methacrylate and optionally containing a dispersion of fillers, colors and other functional particles for the manufacture of sinks, worktops, countertops, etc.

A still further use of the polymer composition according to the invention is as a coating over a base material. One benefit of this form of the invention is that a relatively small amount of the antimicrobials active polymer may be used to give antimicrobial function to the surface of a non-antimicrobial structure. The base material may be another polymer, such as another acrylic layer, polyvinylchloride, or a styrene based polymer for example.

The invention also embodies a method for manufacturing an antimicrobial acrylic polymer composition. The method comprises the steps of combining a quantity of triclosan and OPP with an acrylic polymer material to form an antimicrobial acrylic polymer composition wherein the combined weight concentration of the triclosan and the OPP in the polymer composition is between about 250 ppm and about 50,000 ppm based upon the weight of the polymer composition. In particularly preferred embodiments the triclosan is added to the polymer composition to provide final a concentration between about 1000 ppm and 2500 ppm and the OPP is added to achieve a final concentration between about 1000 ppm and about 2500 ppm based upon the weight of the polymer.

Preferably, the weight ratio of triclosan to OPP in the polymer composition is between about 90:10 and 10:90, more preferably between about 60:40 and about 40:60, and most preferably around 50:50 based upon the weight of the active ingredients.

The triclosan and OPP can be combined with the acrylic polymer in several ways. For example, the triclosan and OPP may be combined with the polymer post-polymerization in an extruder.

A more preferred method for combining the triclosan and OPP with the acrylic polymer is to mix the triclosan and OPP with one of the precursors of the acrylic polymer. For example, the triclosan and OPP may be added to the MMA prior to combining the MMA with PMMA to make the acrylic syrup. Alternatively, the triclosan and OPP can be added to the syrup before the syrup is cast. This addition can be directly to the syrup prior to a mixing step or by adding via premixed sidestream as a solution in MMA with other ingredients.

In a still further embodiment the invention encompasses a method of manufacturing a thermoformable antimicrobial acrylic sheet In broad terms the method comprises the steps of combining a quantity of triclosan and OPP with an acrylic polymer material to form an antimicrobial acrylic polymer composition then forming the antimicrobial acrylic composition into a sheet.

The preferred weight concentrations and weight ratios of triclosan and OPP utilized in this embodiment of the invention are the same as those utilized in previous embodiments and need not be repeated here.

In preferred embodiments the step of combining a quantity of triclosan and OPP with an acrylic polymeric material to form an antimicrobial acrylic polymer composition comprises the step of mixing the triclosan and OPP into a polymeric precursor of the acrylic polymeric material. This precursor may be one of the individual components that make up the acrylic such as methyl methacrylate (MMA) or the acrylic polymer syrup that is made in casting applications. The antimicrobial agents can also be added post-polymerization in an extruder.

After the triclosan and OPP are added to the polymer material the method further comprises forming the resulting polymer composition into a thermoformable acrylic sheet. The preferred methods of forming the sheet are casting or extrusion as known by those skilled in the art and discussed above.

After the sheet is formed it may then be thermoformed or otherwise modified using known methods to create any number of products including but not limited to windshields (especially for aircraft), skylights, outdoor signs, boat surfaces, automobile tail lights, display cases, light fixtures, shower stalls, spas, bathroom basins, and counter tops, hot tubs, shelving and decorative laminates.

### Examples

The efficacy of the claimed invention was demonstrated in the laboratory using small scale Lucite®) acrylic tubs. The tubs were formed from cast acrylic sheets which were then thermoformed into mini-tubs of approximately 45.2 cm² and 10.2 cm deep (7 inches square and 4 inches deep). One tub was a control and did not contain either triclosan or OPP. A second tub contained approximately 2000 ppm of triclosan. A third tub contained approximately 2000 ppm triclosan and 2000 ppm OPP. A fourth tub contained only 2000 ppm of OPP. The triclosan and OPP were incorporated into the acrylic tubs via addition to the precursor acrylic syrup.

The tubs were then filled with deionized water and left standing uncovered for about 4 weeks. Within a week a pink "scum line" became very apparent at the water/air interface in the control tub, the tub that contained only triclosan, and the tub that contained only OPP. This scum line was quite pronounced by the conclusion of the test.

At the conclusion of the test samples were cut from the walls of each of the tubs and examined. Careful examination confirmed that the control tub had no efficacy against the growth of microbes and that the tub containing only triclosan had only a slight retardation effect against bio-fouling of the tub. This was probably due to triclosan's relatively weak efficacy against fungus. However, the wall sample having 2000 ppm triclosan and 2000 OPP was substantially free and clear of microbial growth.

A second set of testing was conducted on the thermoformed acrylic tub material to focus on the antifungal characteristics of the invention. A modified version of AATCC Test Method 90 was used for the antifungal testing.

Samples containing the same antimicrobial concentrations used in each tub along with a control were placed in petri dishes on a nutrient agar that was solidified in each petri dish. An inoculum of approximately 10⁶ spores of *Aspergillus niger* was poured over each of the test pieces. Following a 5 day incubation, the petri plates were visually examined to determine the extent of fungal growth on the sample.

After 5 days the control piece was completely covered by fungus.

The test piece containing 2000 ppm was extensively encroached by fungus.

The test piece containing only 2000 ppm of OPP also showed substantial fungal growth.

The test piece containing 2000 ppm of triclosan and 2000 ppm of OPP had very sparse fungal growth and was by far the best of the three samples at retarding the growth of the fungus.

This result suggests that there exists some hitherto unknown synergistic effect between triclosan and OPP that enhances the antimicrobial efficacy of each thereby providing an antimicrobial acrylic polymer that is more efficacious and economical than those previously known.

## Claims

1. An antimicrobial additive composition for imparting antimicrobial characteristics to acrylic materials, said additive composition comprising:
2,4, 4'-trichloro-2'-hydroxydiphenyl ether; and
orthophenyl phenol.

2. An antimicrobial additive composition according to claim 1 wherein the weight ratio of 2, 4, 4'-trichloro-2'-hydroxydiphenyl ether to orthophenyl phenol is between 90:10 and 10:90.

3. An antimicrobial additive composition according to claim 2 wherein the weight ratio of 2, 4,4'-trichloro-2'-hydroxydiphenyl ether to orthophenyl phenol is between 40:60 and 60:40.

4. An antimicrobial additive composition according to claim 2 further comprising a polymeric carrier.

5. A polymer composition having antimicrobial activity, said composition comprising:
an acrylic polymer material,
2,4, 4'-trichloro-2'-hydroxydiphenyl ether; and
orthophenyl phenol.

6. A polymer composition according to claim 5 wherein the combined weight concentration of the 2,4, 4'-trichloro-2'-hydroxydiphenyl ether and the orthophenyl phenol in the polymer composition is between 250 ppm and 50,000 ppm based upon the weight of the polymer.

7. A polymer composition according to claim 6 wherein the weight ratio of 2,4, 4'-trichloro-2'-hydroxydiphenyl ether to orthophenyl phenol in the composition is between 90:10 and 10:90.

8. A polymer composition according to claim 7 wherein the weight ratio of 2,4,4'-trichloro-2'-hydroxydiphenyl ether to orthophenyl phenol in the composition is between 60:40 and 40:60.

9. A polymer composition according to claim 6 wherein the 2,4, 4'-trichloro-2'-hydroxydiphenyl ether is present between 1000 ppm and 2500 ppm and the orthophenyl phenol is present between 1000 ppm and 2500 ppm.

10. A cast acrylic polymer comprising a polymer composition according to claim 5.

11. An extruded polymer comprising a polymer composition according to claim 5.

12. A thermoformable sheet comprising a polymer composition according to claim 5.

13. A curable resin composition comprising a polymer composition according to claim 5.

14. A surface coating layer supported on a substrate material, the surface coating layer comprising a polymer composition according to claim 5.

15. A molded article or a component of a molded article comprising a polymer composition according to claim 5.

16. A molded article or a component of a molded article according to claim 15 wherein said molded article is selected from the group consisting of windshields, skylights, outdoor signs, boat surfaces, automobile tail lights, display cases, light fixtures, shower stalls, spas, bathroom basins, and counter tops, hot tubs, shelving, decorative laminates and other structural items.

17. A method of manufacturing an antimicrobial acrylic polymer composition comprising the steps of :
combining a quantity of 2, 4, 4'-trichloro-2'-hydroxydiphenyl ether and orthophenyl phenol with an acrylic polymer material to form an antimicrobial acrylic polymer composition wherein the combined weight concentration of the 2, 4, 4'-trichloro-2'-hydroxydiphenyl ether and orthophenyl phenol in the polymer composition is between 250 ppm and 50,000 ppm based upon the weight of the polymer composition.

18. A method according to claim 17 further comprising the step of forming the antimicrobial acrylic polymer composition into a sheet.

19. A method according to claims 17 or 18 wherein the 2,4,4'-trichloro-2'-hydroxydiphenyl ether is present between 1000 ppm and 2500 ppm and the orthophenyl phenol is present between 1000 ppm and 2500 ppm.

20. A method according to claims 17 or 18 wherein the 2,4, 4'-trichloro-2'-hydroxydiphenyl ether and the orthophenyl phenol are combined with the acrylic polymer composition by adding both to a precursor of the acrylic polymer composition.

21. A method according to claims 17 or 18 wherein the weight ratio of 2,4, 4'- trichloro-2'-hydroxydiphenyl ether to orthophenyl phenol in the polymer composition is between 90:10 and 10:90.

22. A method according to claims 17 or 18 wherein the weight ratio of 2,4, 4'- trichloro-2'-hydroxydiphenyl ether to orthophenyl phenol in the polymer composition is between 60:40 and 40:60.

23. A method according to claim 18 wherein the step of forming the polymer into an acrylic sheet is selected from the group consisting of casting the syrup and extruding the syrup.

24. A method according to claim 18 further comprising molding the thermoformable acrylic sheet into a product.

25. A method according to claim 25 wherein the product is selected from the group consisting of windshields, skylights, outdoor signs, boat surfaces, automobile tail lights, display cases, light fixtures, shower stalls, spas, bathroom basins, and counter tops, hot tubs, shelving, decorative laminates and other structural items.

## Patentansprüche

1. Eine antimikrobielle Zusatzstoffzusammensetzung, um acrylischen Materialien antimikrobielle Charakteristika zu verleihen, wobei die Zusatzstoffzusammensetzung folgende Merkmale umfasst:
2,4,4'-Trichlor-2'-hydroxydiphenylether; und
Orthophenylphenol.

2. Eine antimikrobielle Zusatzstoffzusammensetzung gemäß Anspruch 1, bei der das Gewichtsverhältnis von 2,4,4'-Trichlor-2'-hydroxydiphenylether zu Orthophenylphenol zwischen 90:10 und 10:90 liegt.

3. Eine antimikrobielle Zusatzstoffzusammensetzung gemäß Anspruch 2, bei der das Gewichtsverhältnis von 2,4,4'-Trichlor-2'-hydroxydiphenylether zu Orthophenylphenol zwischen 40:60 und 60:40 liegt.

4. Eine antimikrobielle Zusatzstoffzusammensetzung gemäß Anspruch 2, die ferner ein polymeres Trägermittel umfasst.

5. Eine Polymerzusammensetzung, die eine antimikrobielle Aktivität aufweist, wobei die Zusammensetzung folgende Merkmale umfasst:
ein acrylisches Polymermaterial,
2,4,4'-Trichlor-2'-hydroxydiphenylether; und
Orthophenylphenol.

6. Eine Polymerzusammensetzung gemäß Anspruch 5, bei der die Kombiniertes-Gewicht-Konzentration des 2,4,4'-Trichlor-2'-hydroxydiphenylethers und des Orthophenylphenols in der Polymerzusammensetzung zwischen 250 ppm und 50.000 ppm, bezogen auf das Gewicht des Polymers, liegt.

7. Eine Polymerzusammensetzung gemäß Anspruch 6, bei der das Gewichtsverhältnis von 2,4,4'-Trichlor-2'-hydroxydiphenylether zu Orthophenylphenol in der Zusammensetzung zwischen 90:10 und 10:90 liegt.

8. Eine Polymerzusammensetzung gemäß Anspruch 7, bei der das Gewichtsverhältnis von 2,4,4'-Trichlor-2'-hydroxydiphenylether zu Orthophenylphenol in der Zusammensetzung zwischen 60:40 und 40:60 liegt.

9. Eine Polymerzusammensetzung gemäß Anspruch 6, bei der der 2,4,4'-Trichlor-2'-hydroxydiphenylether zwischen 1.000 ppm und 2.500 ppm vorliegt und das Orthophenylphenol zwischen 1.000 ppm und 2.500 ppm vorliegt.

10. Ein gegossenes acrylisches Polymer, das eine Polymerzusammensetzung gemäß Anspruch 5 umfasst.

11. Ein extrudiertes Polymer, das eine Polymerzusammensetzung gemäß Anspruch 5 umfasst.

12. Eine thermoformbare Lage, die eine Polymerzusammensetzung gemäß Anspruch 5 umfasst.

13. Eine Zusammensetzung aus härtbarem Harz, die eine Polymerzusammensetzung gemäß Anspruch 5 umfasst.

14. Eine auf einem Substratmaterial getragene Oberflächenbeschichtungsschicht, wobei die Oberflächenbeschichtungsschicht eine Polymerzusammensetzung gemäß Anspruch 5 umfasst.

15. Ein geformter Artikel oder eine Komponente eines geformten Artikels, der beziehungsweise die eine Polymerzusammensetzung gemäß Anspruch 5 umfasst.

16. Ein geformter Artikel oder eine Komponente eines geformten Artikels gemäß Anspruch 15, wobei der geformte Artikel aus der Gruppe ausgewählt ist, die aus Windschutzscheiben, Oberlichtern, Außenbeschilderungen, Bootsoberflächen, Automobil-Schlusslichtern, Vitrinen, Lichthalterungen, Duschkabinen, Whirlpools, Badezimmer-Waschbecken und Theken-Schränken, Jacuzzis, Regalkonstruktionen, dekorativen Laminaten und anderen Strukturgegenständen besteht.

17. Ein Verfahren zum Herstellen einer antimikrobiellen acrylischen Polymerzusammensetzung, das folgende Schritte umfasst:
Kombinieren einer Menge an 2,4,4'-Trichlor-2'-hydroxydiphenylether und Orthophenylphenol mit einem acrylischen Polymermaterial, um eine antimikrobielle acrylische Polymerzusammensetzung zu bilden, wobei Kombiniertes-Gewicht-Konzentration des 2,4,4'-Trichlor-2'-hydroxydiphenylethers und Orthophenylphenols in der Polymerzusammensetzung zwischen 250 ppm und 50.000 ppm, bezogen auf das Gewicht der Polymerzusammensetzung, liegt.

18. Ein Verfahren gemäß Anspruch 17, das ferner den Schritt des Bildens der antimikrobiellen acrylischen Polymerzusammensetzung zu einer Lage umfasst.

19. Ein Verfahren gemäß Anspruch 17 oder 18, bei dem der 2,4,4'-Trichlor-2'-hydroxydiphenylether zwischen 1.000 ppm und 2.500 ppm vorliegt und das Orthophenylphenol zwischen 1.000 ppm und 2.500 ppm vorliegt.

20. Ein Verfahren gemäß Anspruch 17 oder 18, bei dem der 2,4,4'-Trichlor-2'-hydroxydiphenylether und das Orthophenylphenol mit der acrylischen Polymerzusamensetzung kombiniert werden, indem beide zu einem Vorläufer der acrylischen Polymerzusammensetzung hinzugegeben werden.

21. Ein Verfahren gemäß Anspruch 17 oder 18, bei dem das Gewichtsverhältnis von 2,4,4'-Trichlor-2'-hydroxydiphenylether zu Orthophenylphenol in der Polymerzusammensetzung zwischen 90:10 und 10:90 liegt.

22. Ein Verfahren gemäß Anspruch 17 oder 18, bei dem das Gewichtsverhältnis von 2,4,4'-Trichlor-2'-hydroxydiphenylether zu Orthophenylphenol in der in der Polymerzusammensetzung zwischen 60:40 und 40:60 liegt.

23. Ein Verfahren gemäß Anspruch 18, bei dem der Schritt des Bildens des Polymers zu einer acrylischen Lage aus der Gruppe ausgewählt ist, die aus einem Gießen des Sirups und einem Extrudieren des Sirups besteht.

24. Ein Verfahren gemäß Anspruch 18, das ferner ein Formen der thermoformbaren acrylischen Lage zu einem Produkt umfasst.

25. Ein Verfahren gemäß Anspruch 25, bei dem das Produkt aus der Gruppe ausgewählt ist, die aus Windschutzscheiben, Oberlichtern, Außenbeschilderungen, Bootsoberflächen, Automobil-Schlusslichtern, Vitrinen, Lichthalterungen, Duschkabinen, Whirlpools, Badezimmer-Waschbecken und Theken-Schränken, Jacuzzis, Regalkonstruktionen, dekorativen Laminaten und anderen Strukturgegenständen besteht.

## Revendications

1. Composition d'additif antimicrobien pour conférer des caractéristiques antimicrobiennes aux matériaux acryliques, ladite composition d'additif comprenant :
éther de 2,4,4'-trichloro-2'-hydroxydiphényle ; et
phénol orthophénylique.

2. Composition d'additif antimicrobien selon la revendication 1, dans laquelle le rapport en poids entre l'éther de 2,4,4'-trichloro-2'-hydroxydiphényle et le phénol orthophénylique est compris entre 90: 10 et 10:90.

3. Composition d'additif antimicrobien selon la revendication 2, dans lequel le rapport en poids entre l'éther de 2,4,4'-trichloro-2'-hydroxydiphényle et le phénol orthophénylique est compris entre 40:60 et 60:40.

4. Composition d'additif antimicrobien selon la revendication 2, comprenant, par ailleurs, un porteur polymère.

5. Composition polymère présentant une activité antimicrobienne, ladite composition comprenant :
un matériau polymère acrylique,
éther de 2,4,4'-trichloro-2'-hydroxydiphényle ; et
phénol orthophénylique.

6. Composition polymère selon la revendication 5, dans laquelle la concentration en poids combinée de l'éther de 2,4,4'-trichloro-2'-hydroxydiphényle et du phénol orthophénylique dans la composition polymère est comprise entre 250 ppm et 50.000 ppm sur base du poids du polymère.

7. Composition polymère selon la revendication 6, dans lequel le rapport en poids entre l'éther 2,4,4'-trichloro-2'-hydroxydiphényle et le phénol orthophénylique dans la composition est compris entre 90: 10 et 10:90.

8. Composition polymère selon la revendication 7, dans laquelle le rapport en poids entre l'éther de 2,4,4'-trichloro-2'-hydroxydiphényle et le phénol orthophénylique dans la composition est compris entre 60:40 et 40:60.

9. Composition polymère selon la revendication 6, dans lequel l'éther de 2,4,4'-trichloro-2'-hydroxydiphényle est présent en une quantité comprise entre 1000 ppm et 2500 ppm et le phénol orthophénylique est présent en une quantité comprise entre 1000 ppm et 2500 ppm.

10. Polymère acrylique coulé comprenant une composition polymère selon la revendication 5.

11. Polymère extrudé comprenant une composition polymère selon la revendication 5.

12. Feuille thermoformable comprenant une composition polymère selon la revendication 5.

13. Composition de résine durcissable comprenant une composition polymère selon la revendication 5.

14. Couche de revêtement de surface supportée sur un matériau de substrat, la couche de revêtement de surface comprenant une composition polymère selon la revendication 5.

15. Article moulé ou composant d'un article moulé comprenant une composition polymère selon la revendication 5.

16. Article moulé ou composant d'un article moulé selon la revendication 15, dans lequel ledit article moulé est choisi parmi le groupe composé de pare-brise, lucarnes, enseignes extérieures, surfaces de bateau, feux arrière d'automobile, vitrines, montages légers, cabines de douche, installations thermales, bassins de salle de bains, et dessus de comptoir, bassins d'eau chaude, rayonnages, stratifiés décoratifs et autres articles structuraux.

17. Procédé de préparation d'une composition polymère acrylique antimicrobienne, comprenant les étapes consistant à :
combiner une quantité d'éther de 2,4,4'-trichloro-2'-hydroxydiphényle et de phénol orthophénylique avec un matériau polymère acrylique pour former une composition polymère acrylique antimicrobienne, dans lequel la concentration en poids combinée d'éther de 2,4,4'-trichloro-2'-hydroxydiphényle et de phénol orthophénylique dans la composition polymère est comprise entre 250 ppm et 50.000 ppm sur base du poids de la composition polymère.

18. Procédé selon la revendication 17, comprenant, par ailleurs, l'étape consistant à façonner la composition polymère acrylique antimicrobienne en une feuille.

19. Procédé selon les revendications 17 ou 18, dans lequel l'éther de 2,4,4'-trichloro-2'-hydroxydiphényle est présent en une quantité comprise entre 1000 ppm et 2500 ppm et le phénol orthophénylique est présent en une quantité comprise entre 1000 ppm et 2500 ppm.

20. Procédé selon les revendications 17 ou 18, dans lequel l'éther de 2,4,4'-trichloro-2'-hydroxydiphényle et le phénol orthophénylique sont combinés avec la composition polymère acrylique en ajoutant les deux à un précurseur de composition polymère acrylique.

21. Procédé selon les revendications 17 ou 18, dans lequel le rapport en poids entre l'éther de 2,4,4'-trichloro-2'-hydroxydiphényle et le phénol orthophénylique dans la composition polymère est compris entre 90: 10 et 10:90.

22. Procédé selon les revendications 17 ou 18, dans lequel le rapport en poids entre l'éther de 2,4,4'-trichloro-2'-hydroxydiphényle et le phénol orthophénylique dans la composition polymère est compris entre 60:40 et 40:60.

23. Procédé selon la revendication 18, dans lequel l'étape consistant à façonner le polymère en une feuille acrylique est choisie parmi le groupe composé de la coulée du sirop et de l'extrusion du sirop.

24. Procédé selon la revendication 18, comprenant, par ailleurs, le moulage de la feuille acrylique thermoformable, pour obtenir un produit.

25. Procédé selon la revendication 25, dans lequel le produit est choisi parmi le groupe composé de pare-brise, lucarnes, enseignes extérieures, surfaces de bateau, feux arrière d'automobile, vitrines, montages légers, cabines de douche, installations thermales, bassins de salle de bains, et dessus de comptoir, bassins d'eau chaude, rayonnages, stratifiés décoratifs et autres articles structuraux.
